**Europäisches Patentamt**

**European Patent Office**

**Office européen des brevets**

(19)

(11) Veröffentlichungsnummer: **0 101 859**
**B1**

(12) # EUROPÄISCHE PATENTSCHRIFT

(45) Veröffentlichungstag der Patentschrift:
14.10.87

(21) Anmeldenummer: **83106860.6**

(22) Anmeldetag: **13.07.83**

(51) Int. Cl.⁴: **G 01 N 27/26**

(54) Einrichtung für präparative Gelelektrophorese, insbesondere zur Gemischtrennung an einer einen Gradienten enthaltenden Polyacrylamid-Gelsäure.

(30) Priorität: **23.07.82 CH 4521/82**

(43) Veröffentlichungstag der Anmeldung:
**07.03.84 Patentblatt 84/10**

(45) Bekanntmachung des Hinweises auf die Patenterteilung:
**14.10.87 Patentblatt 87/42**

(84) Benannte Vertragsstaaten:
**AT BE CH DE FR GB IT LI LU NL SE**

(56) Entgegenhaltungen:
**US-A-3 375 187**

**ANALYTICAL BIOCHEMISTRY, Band 51, Nr. 2, Februar 1973, Seiten 456-465, Academic Press, Inc.; K. SHIMADA u.a.: "A new device of preparative polyacrylamide gel electrophoresis and its application to analysis of cellular RNA"**
**ANALYTICAL BIOCHEMISTRY, Band 11, 1965, Seiten 342-361; P.H. DUESBERG u.a.: "Preparative zone electrophoresis of proteins on polyacrylamide gels in 8 M urea"**

(73) Patentinhaber: **Hediger, Matthias, Bernstrasse Ost 52, CH- 5034 Suhr (CH)**

(72) Erfinder: **Hediger, Matthias, Bernstrasse Ost 52, CH- 5034 Suhr (CH)**

(74) Vertreter: **Frei, Alexandra Sarah, c/o Frei Patentanwaltsbüro Hedwigsteig 6 Postfach 95, CH- 8029 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Einrichtung für präparative Gelelektrophorese, umfassend einen ersten äusseren kühlbaren Zylinder, einen im Innenraum des äusseren Zylinders angeordneten zweiten inneren kühlbaren Zylinder, eine zwischen erstem und zweitem Zylinder eingebrachte kompakte Säule aus Trennmaterial und ober- sowie unterhalb der Trennsäule angeordnete, gegen den inneren und äusseren Zylinder abgedichtete, translatorisch verschiebbare Adapterteile.

Polyacrylamidgelelektrophorese (PAGE) ist eine von den wirksamsten bekannten Methoden zur analytischen Auftrennung von Proteinen und Peptiden. Das präparative Vorgehen des PAGE, welches die Trennung von grösseren Substanzmengen in ihre Gemischbestandteile ermöglichen soll, wurde jedoch oft durch technische Probleme erschwert. Bei der weitverbreiteten Plattengelelektrophorese wurden unter Verwendung einer ca. 3 mm dicken Gelschicht schon Substanzbelastungen bis zu 13 mg Protein/cm möglich, dies allerdings auf Kosten der Trennschärfe, die bei der Plattengelelektrophorese wegen der unvermeidlichen Randeffekte ohnehin ein inhärentes Problem darstellen. Allgemein erreichen Vorrichtungen zur Plattengelelektrophorese - die für analytische Anwendungszwecke unbestritten vorzüglich ist - bestenfalls semipräparative Kapazität bezüglich der zu transportierenden Materialdichte und -menge.

Eine Einrichtung zur präparativen Säulenelektrophorese ist beispielsweise durch die US-PS-3 375 187 bekanntgeworden. Die darin enthaltene technische Lehre befasst sich mit der, auch zu präparativen Zwecken dienenden Auftrennung von Substanzgemischen in einer (hohl-)zylindrischen Gelsäule, die zwischen einem äusseren Zylinder mit Kühlmantel und einem inneren Kühlfinger eingebracht ist. Der Trennungsvorgang in der in einem elektrischen Feld angeordneten Gelsäule der erwähnten Vorrichtung verläuft meist planmässig, bis die Elution der aufgetrennten Materialmengen einsetzen soll. Beim Einlaufen der getrennten Gemischbestandteile in die Elution beginnt eine Tendenz wirksam zu werden, gemäss der die aufgetrennten Substanzbanden sukzessive asymmetrisch in die Elution "einlaufen", was bei einer geometrisch knappen Trennung zu einer partiellen Vermischung, d.h. bei kleinem Bandenabstand, wieder zur Vermischung der getrennten Substanz führt. Bekannt ist auch die Eigenschaft der Einrichtung zur unvollständigen Elution, was durch einen erhöhten Flüssigkeitsstrom zu beheben versucht wird. Die daraus resultierende unerwünschte Probenverdünnung verhindert unter anderem die Detektion bestimmter Substanzen. Beispielsweise ist die kontinuierliche UV-Detektion im Gebiet um 280 nm von Peptidmaterial bis zur Unbrauchbarkeit der Messung gestört. Der dem beschriebenen Elutionssystem zugeordnete "Debubbler" hilft dabei, eine unliebsame Blasenbildung in der Elutionsflüssigkeit zu bekämpfen; ausserdem ist nachteilig anzusehen, dass die Kühlung im unteren, für die Elution reservierten Kolonnenabschnitt für eine Anzahl Trennprobleme nicht ausreichend ist. Weiterhin ist das Manipulieren mit der beschriebenen Einrichtung recht aufwendig, insbesondere tritt eine sehr erhöhte Schwierigkeit auf, wenn ein Gradientengel gegossen werden soll.

Es ist Aufgabe der Erfindung, eine Einrichtung zu schaffen, mit der die präparative Gelelektrophorese bei verhältnismässig hoher Substanzbelastung auch bei kleinem Separierungsabstand der sich auftrennenden Komponenten noch einwandfreie Trennresultate liefert.

Es ist weiter Aufgabe der Erfindung, in Anbetracht der begrenzten Dimensionen einer Trennkolonne eine bessere Trennkapazität und in Anbetracht der nicht seltenen Langzeit-Trennvorgänge eine erhöhte Betriebssicherheit herbeizuführen.

Ferner ist es Aufgabe der Erfindung, eine Vorrichtung anzugeben, die es erlaubt, die in der Einrichtung zur Gelelektrophorese verwendete Gelkolonne nach deren Erschöpfung mit hoher Genauigkeit jeweils wieder zu erneuern.

Die Aufgabe wird durch die in den Patentansprüchen angegebene Erfindung gelöst.

Figur 1 zeigt eine Übersicht der Einrichtung für präparative Polyacrylamid-Gelelektrophorese (PAGE) gemäss der Erfindung;

Figur 2 zeigt in schematischer Darstellung die Funktionsweise der Vorrichtung in Figur 1;

Figur 3 zeigt im Detail den Aufbau der beiden über und unter der Gelsäule angeordneten Adapter;

Figur 4 zeigt in Draufsicht ein in den Adaptern gemäss Figur 3 verwendetes Kanalsystem;

Figur 5 zeigt eine Ausführungsform der Adapter gemäss Figur 3 mehr detailliert;

Figur 6 zeigt die gesamte Einrichtung für die Präparattrennung während des Gelgiessens;

Figur 7 zeigt ein in der Vorrichtung gemäss Figur 1 angeordnetes Gelsystem mit einem Gelgradienten gemäss der Erfindung; und

Figur 8 zeigt ein Trennungsbeispiel an C-Phycocyanin aus dem Cyanobakterium Mastigocladus laminosus.

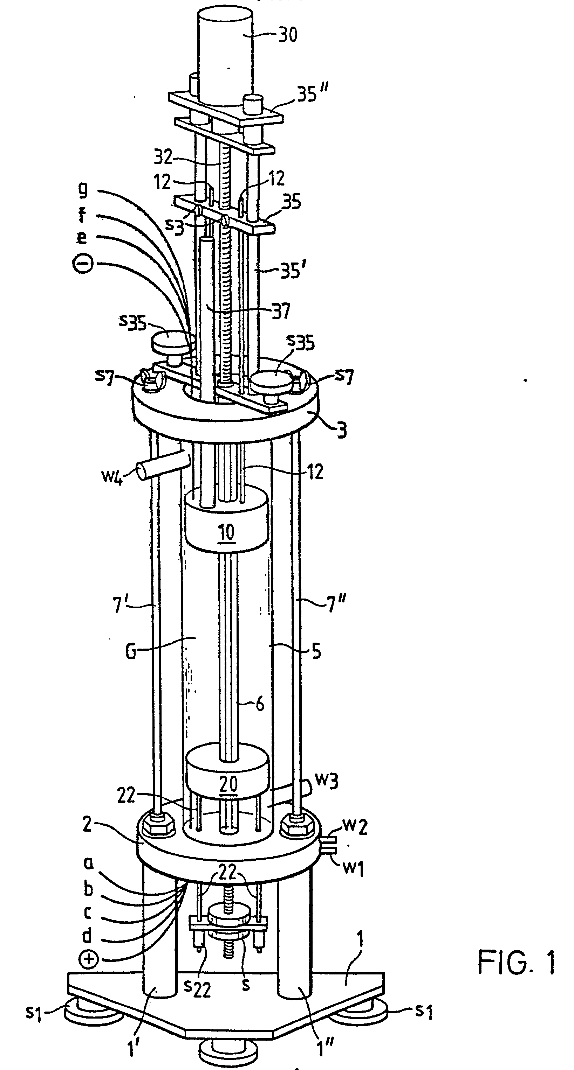

Eine Übersicht der Einrichtung für präparative Polyacrylamidgelelektrophorese ist in Figur 1 dargestellt. Auf einem mittels Stellschrauben $s_1$ nivellierbaren Grundgerüst 1 mit Haltestangen 1', 1'' ist die gesamte Einrichtung aufgebaut. Zwischen einer unteren Halteplatte 2 und einer oberen Halteplatte 3, die beispielsweise aus Plexiglas bestehen können, ist ein äusserer Glaszylinder 5 mit Kühlmantel angeordnet, in dessen Innenraum ein weiterer innerer Glaszylinder 6 bzw. ein Kühlfinger den Innenraum so aufteilt, dass ein entsprechend dimensionierter Hohlzylinder für den Gelraum G entsteht. Vorzugsweise beträgt die Länge der Glaszylinder ungefähr 350 mm, der Innendurchmesser des äusseren Glaszylinders mit Kühlmantel ungefähr 45 mm und der Aussendurchmesser des in den Innenraum hineinragenden Kühlfingers ungefähr 16 mm. Im Innenraum des Glaszylinders 5 ist weiterhin ein unterer, im Glaszylinder verschiebbarer Adapter 20 und ein oberer, ebenso in Längsrichtung verschiebbarer Adapter 10 angeordnet. Zwischen diesen beiden Adaptern wird die eigentliche Gelkammer G eingeschlossen. Zum Zweck der Befestigung sind die untere und obere Halteplatte 2, 3 durch zwei Spannstangen 7', 7'' verbunden und mit Halteschrauben $s_7$ relativ zum Glaszylinder 5 verspannt. Der äussere Glaszylinder 5 zeigt einen Kühlmitteleinlass $w_3$ und einen Kühlmittelauslass $w_4$. Das Kühlmedium für den Kühlfinger wird diesem vorzugsweise durch Kanäle oder Bohrungen in der unteren Halteplatte 2 zugeführt, die schliesslich in die Ein- bzw. Auslassöffnungen $w_1$, $w_2$ münden.

Der mehrschichtige Aufbau der beiden Adapter 10 und 20 wird an späterer Stelle genauer beschrieben. Der untere Adapter 20 ist über einen kleinen Bereich im unteren Teil des Zylinders 5 bzw. Kühlfingers 6 längsverschiebbar, dazu sind am unteren Adapter 20 zwei die untere Halteplatte 2 durchstossende Führungselemente 22 befestigt, die ihrerseits mittels Befestigungsschrauben $s_{22}$ über eine kleine Stellplatte miteinander verbunden sind, und welche Stellplatte mittels Stellschrauben axial zu den Glaszylindern verschoben bzw. fixiert werden kann. Durch die untere Halteplatte 2 und schliesslich in den unteren Adapter 20 führen mehrere Zu- und Ableitungen a, b, c, d für die Elektrolytpufferlösungen oder die Elutionspufferlösungen sowie eine elektrische Zuleitung (plus). Ausser der elektrischen Zuleitung handelt es sich hier um Schlauchleitungen.

Der obere Adapter 10 ist ebenfalls axial verschiebbar im Zylinder 5 angeordnet und kann über die gesamte Länge des Gelraumes verschoben werden. Zu diesem Zweck sind im oberen Adapter 10, ähnlich wie im unteren Adapter 20, Führungselemente 12 angebracht, die an einem oberen Traggerüst 35, 35', 35'' befestigt sind. Auf diesem Traggerüst sitzt ein regulierbarer Motor 30, der eine Gewindestange 32 antreibt, welche Gewindestange die Tragplatte 35 im Traggerüst zusammen mit den Führungselementen 12 und dem Adapter 10 nach oben und unten bewegen kann. Das Traggerüst 35 ist mittels Schrauben $s_{35}$ auf der oberen Halteplatte 3 befestigt. Zu- und Ableitungen g, f, e für den Elektrodenpuffer sowie für einen Geleinlass beim Präparieren oder Aufbereiten der Gelsäule und ein elektrischer Anschluss (minus) sind durch die obere Halteplatte 3 in den oberen Adapter 10 eingeführt. Weiterhin ist im oberen Adapter 10 eine Öffnung vorgesehen, um die zu trennende Lösung auf die Gelkolonne aufzutragen; diese Öffnung kann mittels eines Stöpselstiftes 37 verschlossen werden. Beide Adapter sind in dieser Ausführung durch O-Ringe zwischen Glas und Adapter abgedichtet.

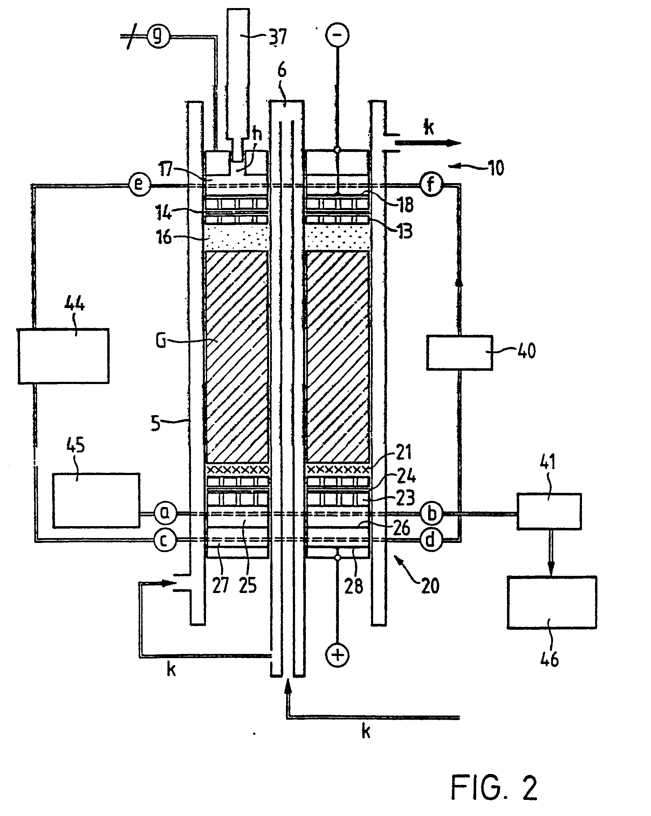

Figur 2 zeigt in schematischer Darstellung die Funktionsweise der Vorrichtung für präparative Polyacrylamidgelelektrophorese. Zwischen dem äusseren Glaszylinder 5, dem inneren Kühlfinger 6, dem unteren Adapter 20 und dem oberen Adapter 10 wird die in ihrer Volumengrösse verstellbare Gelkammer gebildet. Die beiden Adapter zeigen elektrische Zuleitungen zu Kanälen, in welchen der Elektrodenpuffer zirkuliert. Die Zirkulation des Elektrodenpuffers ist hier im Gegenuhrzeigersinn dargestellt und wird durch eine Pumpe 40 bewirkt. Der Elektrodenpuffer fliesst aus einem Sammelgefäss 44 über den Einlass c in den Elektrodenpufferkanal des unteren Adapters 20, tritt am Auslass d wieder aus, wird durch die Pumpe in den Einlass f des oberen Adapters 10 in dessen Elektrodenpufferkanal wieder eingeführt und tritt dort über den Auslass e wieder aus, um in das Sammelgefäss für den Elektrodenpuffer zurückzufliessen. Die Zirkulation des Elektrodenpuffers dient zusätzlich noch zur Kühlung der Elektroden, welche durch die Kühlung nicht erreicht werden. Die bei der Elektrolyse gebildeten Gasblasen könnten in einem separaten Gasfanggerät während der Elektrolysezeit gefangen werden, ohne dass das System deswegen nach aussen geöffnet werden muss. An dieser Stelle soll noch speziell erwähnt sein, dass es sich bei der Einrichtung gemäss Erfindung im Gegensatz zum Stand der Technik um ein geschlossenes System handelt. Unter dem geschlossenen System ist folgendes zu verstehen: Das gesamte Flüssigkeitsleitsystem, also das Puffersystem, umfassend Elektrodenpuffer, Elutionspuffer, die Trennsäule, alle Kanäle, Zuleitungen etc., sind entweder geschlossene Kreislaufsysteme oder Flüssigkeitsvorratsverschiebungen mit üblichem Flüssigkeitsabschluss.

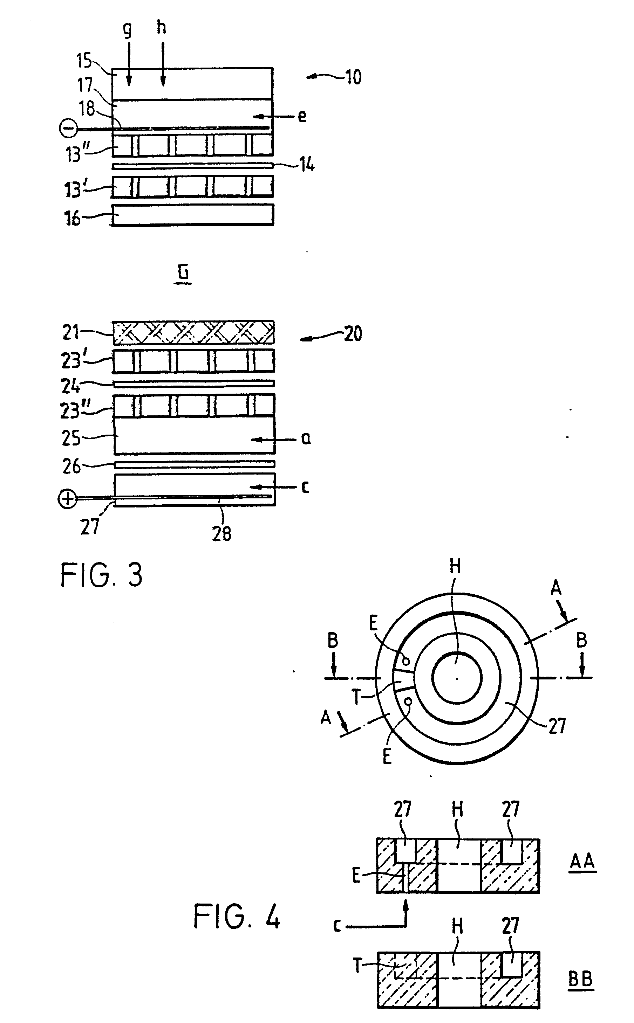

Eine zweite Pumpe 41 fördert den Elutionspuffer aus einem Sammelgefäss 45 über den Einlass a durch den Elutionskanal im unteren Adapter 20 zum Auslass b und von dort beispielsweise in den Fraktionensammler 46. Die Beschreibung der diversen Kanäle für die Elektrodenpufferzirkulation und das Durchfliessen des Elutionspuffers wird im Zusammenhang mit der nächstfolgenden Figur 3, die den Aufbau der beiden Adapter im einzelnen zeigt, näher besprochen. Der Kühlmittelfluss durch den Kühlfinger 6 und den Kühlmantel des Glaszylinders 5 ist durch Pfeile über die die Kühlsysteme verbindenden Leitungen K dargestellt. Letztlich zeigt im Zusammenhang mit dieser Figur 2 der obere Adapter 10 noch zwei Zuleitungen, nämlich die Zuleitung g, mit deren Hilfe die Gellösung beim Aufbau der Gelkolonne eingefüllt wird, sowie die Öffnung h, durch welche das Präparat auf die Kolonne aufgetragen wird. Die Zuleitung h ist, wie in Figur 1 dargestellt, durch den stangenförmigen Stöpselstift 37 verschliessbar.

Figur 3 zeigt nun im Detail den Aufbau der beiden Adapter 10 und 20. Der obere Adapter besteht aus einem Adapterkopf 15 mit darin eingelassenem Elektrolytpufferkanal 17. In diesem Elektrolytpufferkanal ist zusätzlich eine Platinelektrode 18 angeordnet, deren Kontakt nach aussen geführt schliesslich mit einer Stromquelle verbunden ist. In den Adapterkopf führen Einlässe für die Gelflüssigkeit zum Aufbau der Gelsäule, mit g bezeichnet, und für das Trennpräparat oder das zu trennende Präparat, bezeichnet mit h. Ein weiterer Einlass, der in einer späteren Figur näher beschrieben ist, dient zum Einströmen des Elektrolytpuffers, dargestellt durch einen mit e bezeichneten Pfeil. Der Elektrolytkanal ist nach unten abgeschlossen durch eine Lochplatte 13″, zwischen deren Gegenstück, auch eine Lochplatte 13′, ein Filterelement 14, vorzugsweise ein Durapor-Filter der Firma Millipore, eingeklemmt wird. Dieser mit dem Puffer getränkte Filter bildet einen elektrischen Übergang zu einem puffergefüllten Zwischenraum 16, der über der präparierten Gelsäule angeordnet ist. Unterhalb des puffergefüllten Zwischenraumes 16 der Säule beginnt die mit G bezeichnete Gelkammer, welche auf der Oberseite des unteren Adapters aufliegt. Dieser untere Adapter ist von der Gelkammer her betrachtet folgendermassen aufgebaut: Eine Gitterplatte 21, vorzugsweise ein weitmaschiges Nylonnetz, bildet ähnlich dem puffergefüllten Raum 16 einen ebensolchen Zwischenraum, der über der Lochplatte 23′ mit ihrem Gegenstück 23″ aufgesetzt ist. Zwischen den beiden Lochplatten 23′ und 23″ ist wiederum ein Filterelement 24 angeordnet, welches so gewählt ist, dass das getrennte Präparat ohne Schwierigkeiten durchtreten kann. Vorzugsweise wird auch hier ein Durapor-Filter verwendet. Die beiden Lochplatten 23 mit dem dazwischenliegenden Filterelement 24 sind auf den Elutionskanal aufgelegt, der einen Einlass für den Elutionspuffer aufweist, dargestellt durch einen mit a bezeichneten Pfeil. Unterhalb des Elutionskanals, also diesen abschliessend, ist eine Dialysiermembran 26 eingelegt, die nur noch die Funktion hat, den elektrischen Kontakt mit dem Elektrolytpuffer im Elektrodenraum aufrechtzuerhalten, jedoch soll diese Dialysiermembran die Moleküle des Trennpräparats nicht mehr durchtreten lassen. Unterhalb dieser Dialysiermembran 26 ist der Elektrolytpufferkanal 27 angeordnet, in den eine Platinelektrode 28 mit äusseren Anschlussmöglichkeiten eingelegt ist. Der mit c bezeichnete Pfeil soll den Einlass für den Elektrolytpuffer darstellen; über den Einlass c wird, wie in Figur 2 dargestellt, die eine Platinelektrode umströmt und derselbe Puffer fliesst dann weiter, um im oberen Adapter 10 am Einlass e in den Elektrolytpufferkanal 17 einzufliessen. Um einer Absorption der Trennsubstanz in die Dialysiermembran vorzubeugen, empfiehlt es sich, den vom Präparat durchströmten Querschnitt der Membran zu minimieren.

So besteht also der untere Adapter aus zwei übereinanderliegenden Kanalsystemen 25 und 27, wobei das Kanalsystem 27 während der Elektrophorese mit Elektrodenpuffer durchspült wird und über die Platinelektrode 28 den elektrischen Kontakt zum Stromversorgungsgerät vermittelt. Das Kanalsystem 25 dient als Elutionskammer und wird während der Elektrophorese vom Elutionspuffer durchspült. Der Inhalt des als Elutionskammer dienenden Kanalsystems beträgt in der angegebenen Dimensionierung etwa 1 ml. Die beiden Kanalsysteme sind, wie schon dargelegt, durch eine Dialysiermembran getrennt, welche wohl den elektrischen Kontakt ermöglicht, aber für Peptide und Proteine beispielsweise undurchlässig ist.

Zwischen dem unteren Adapter und dem darüberliegenden Gel befindet sich ein Zwischenraum, dessen minimale Höhe durch die Gitterplatte 21 gegeben ist. Der im Adapter verwendete Durapor-Filter ist für beispielsweise Peptide und Proteine völlig durchlässig und stellt zudem den elektrischen Kontakt von der Elektrodenkammer zur Gelsäule her, verhindert jedoch das Durchmischen von Elutionspuffer in dem durch die Gitterplatte 21 hergestellten Zwischenraum.

Die Bedeutung dieses Zwischenraums liegt in der Herstellung eines symmetrischen elektrischen Kontakts über die gesamte untere Gelfläche, womit eine Elution der im Gel aufgetrennten Banden ohne Deformierung gewährleistet ist. Das im Gel aufgetrennte Produkt gelangt somit zuerst in den Zwischenraum der Gitterplatte 21 und wird dann mit einer Geschwindigkeit, die viel grösser ist als die Transportgeschwindigkeit im Gel, in das Kanalsystem 25 überführt, vom darin strömenden Elutionspuffer erfasst und beispielsweise zu einem Fraktionensammler wegtransportiert.

Der obere Adapter hat zwei Funktionen: Er dient einerseits als Hilfselement zum Gelgiessen, und andererseits wird er als obere Gegenelektrode benützt. Als Hilfsmittel zum Gelgiessen ermöglicht der obere Adapter das Überschichten von Lösungen mit verschiedener Dichte und das Giessen von Gelgradienten. Das spezielle Aufbauen einer Gelsäule, also das Gelgiessen, wird an späterer Stelle noch eingehend erläutert.

Figur 4 zeigt nun ein Kanalsystem in Draufsicht sowie in zwei Schnitten. Vorzugsweise wird so ein Kanalsystem aus einer massiven Plexiglasscheibe herausgearbeitet, indem solch eine Scheibe erst im Zentrum durchbohrt wird, um eine Öffnung H für den Kühlfinger herzustellen; anschliessend wird ein konzentrischer Kanal 27 eingeschnitten, entweder so, dass er, um einen Trennsteg T zu bilden, nicht 360° umläuft, oder aber eine solche Trennwand T wird dann nachträglich eingesetzt. Zu- und Abflussöffnungen E erlauben es, den Puffer nahe der Trennwand T einströmen zu lassen, welcher das ganze Kanalsystem füllt und schliesslich beim Auslass wieder abfliesst. Der Schnitt A-A zeigt beispielsweise einen Einlass c für den Elektrolytpuffer, welcher in das Kanalsystem 27 oder in die Elektrolytpufferkammer 27 einmündet; ein zweiter Schnitt B-B ist durch die Trennwand gelegt, um zu zeigen, wie das Kanalsystem an dieser Stelle blockiert ist. Über dieses Kanalsystem würde beispielsweise die Dialysiermembran 26 gelegt und darüber das Kanalsystem 25 für den Elutionspuffer aufgesetzt. Dieses Kanalsystem 25 würde in diesem Fall auch die Trennwand T aufweisen, jedoch nach unten und oben offen sein. Die Ein- und Auslassöffnunen würden beispielsweise radial am Rand gegen innen gerichtet angebracht. Die über das Kanalsystem 25 gelegte Lochplatte 23 mit dem Filterelement 24 würde an jeder Stelle, an der sich ein Loch befindet, das Eluiermaterial in den Elutionskanal einlassen. Damit ist ein Abfliessen des Elutionsmaterials aus der abgetrennten Bande über den ganzen Querschnitt in ganz gleichmässigem Strom gewährleistet, so dass die zu eluierende Bande nicht durch verschiedene, über den Querschnitt verteilte Strömungs- bzw. Transportgeschwindigkeiten verzerrt würde.

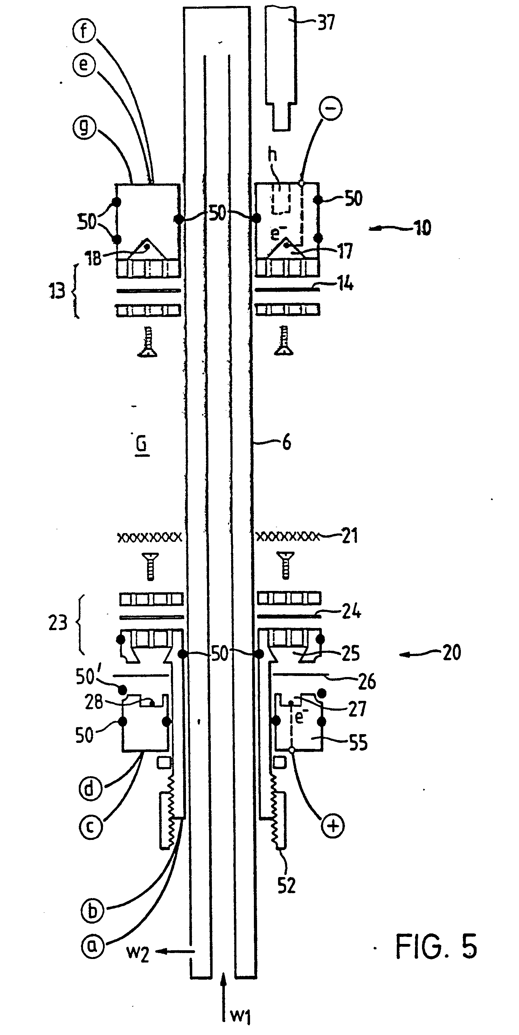

Figur 5 zeigt nun eine direkte Ausführungsform der Adapter 10 und 20, wie sie im Zusammenhang mit Figur 3 mehr schematisch dargelegt wurden. Beginnend mit dem oberen Adapter 10 sieht man, dass dieser durch O-Ringe 50 abgedichtet zwischen Kühlfinger 6 und dem nicht dargestellten Aussenzylinder 5 längsverschiebbar ausgestaltet wurde. Der Elektrolytpufferkanal 17 wird durch eine in den Adapter eingearbeitete, im Querschnitt dreieckige Ringnut gebildet, deren Basis durch das Lochplattenpaar 13 mit dazwischengeklemmtem Filterelement 14 abgeschlossen ist.

Die abgebildeten Schrauben dienen zur Befestigung der Lochplatten.

Der untere Adapter 20 ist ebenfalls längsverschiebbar, wobei in dieser Ausführung ein System von konzentrischen Bauteilen ein einfaches Aufeinanderschieben und Fixieren der Adapterteile ermöglicht. Die an den Elutionskanal 25 anschliessende Lochplatte 23″ (Figur 3) ist einstückig mit einem ringförmigen Einschnitt für diesen Kanal gearbeitet. Ein längsverschiebbares Gegenstück 55 mit ringförmigem Kanal 27 für den Elektrolytpuffer lässt sich mittels einer Überwurfmutter 52 so gegen das Diaphragma 26 und den Elutionskanal 25 pressen, dass mit Hilfe eines weiteren O-Rings 50′ eine völlige Abdichtung nach aussen erzielt wird. Die Bauteile werden je nach Anforderung aus einem adäquaten Material gefertigt. In diesem Fall wurde das leicht bearbeitbare Plexiglas verwendet.

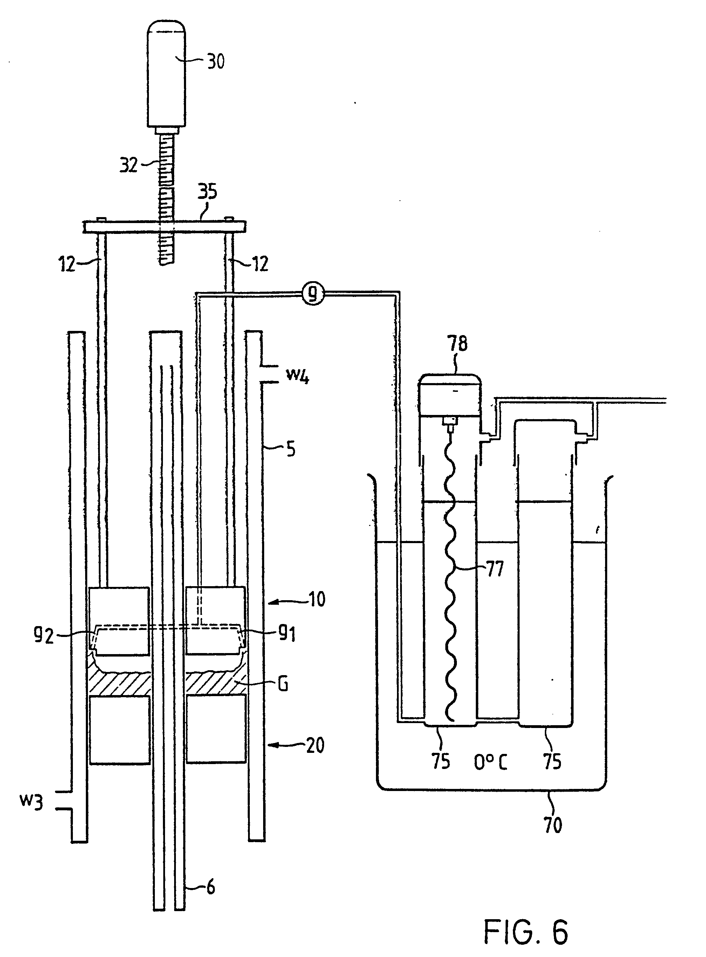

Die Anordnung zum Gelgiessen ist in Figur 6 abgebildet. Auf der linken Seite ist schematisch dargestellt die Einrichtung zur präparativen Gelelektrophorese, wie sie schon beschrieben wurde. Man erkennt in stark schematischer Vereinfachung den Glaszylinder 5 mit Kühlmantel und den Kühlwasseranschlüssen $w_3$, $w_4$, den inneren Kühlfinger 6, das obere Traggerüst 35 mit aufgesetztem Elektromotor 30, der die Gewindestange 32 antreibt, um den oberen Adapter 10 anzuheben. Der untere Adapter 20 bleibt örtlich stationär. Man sieht, dass die beiden Adapter in diesem Bild zusammengeschoben wurden, um zwischen ihnen durch langsames, axiales Voneinanderwegbewegen die Gelsäule aufzugiessen. Ein schon aufgegossener Teil G soll anzeigen, dass die Einrichtung eben gerade zum Gelgiessen verwendet wird. Über den Einlass g, der sich in zwei oder mehrere Kanäle $g_1$, $g_2$, $g_n$ fortsetzt, wird das Gel aus der rechtsstehenden Gelbereitungsvorrichtung (Gradientenmischer) in die Gelkammer eingeführt. Diese rechtsstehende Vorrichtung besteht im wesentlichen aus einem Kühlbad 70, einem kommunizierenden Gefässpaar 75, das die Gellösung enthält, wobei in einem der beiden Gefässe ein von einem Motor 78 angetriebenes Rührwerk 77 aufgesetzt ist. Beide der kommunizierenden Gefässe stehen unter leichtem Überdruck, vorzugsweise 0,785 bar (0,8 atü). Dieser Überdruck wird am besten durch Stickstoff herbeigeführt. Dabei muss sich das ganze System, also auch die Trenneinrichtung, vor dem Gelgiessen in dem genannten Überdruck befinden. Wird nun der obere Adapter 10 mittels dem Motor 30 langsam nach oben gezogen, so fliesst Gellösung vom Gradientenmischer über die Leitung g durch die Austrittslöcher $g_1$, $g_2$, $g_n$, vorzugsweise an der Glaswand entlang, in den Raum zwischen oberem und unterem Adapter, also in die Gelkammer, und es erfolgt ein fortlaufendes Überschichten, ohne dass die vorher gegossene Lösung aufgewirbelt wird. Der Überdruck von beispielsweise 0,785 bar (0,8 atü) ist nötig, da beim Heben des oberen Adapters ein Unterdruck entstehen kann, was die Bildung von Luftblasen zur Folge hätte. Es wird also durch diese Massnahme ein störender Hohlsog vermieden.

Der obere Adapter besitzt im weiteren eine Öffnung h, welche hier nicht dargestellt ist, durch welche mit beispielsweise durch einen Schlauch verlängerter Pipette das zu trennende Material aufgetragen werden kann. Diese Öffnung kann dann anschliessend durch einen Stöpsel 37 verschlossen werden.

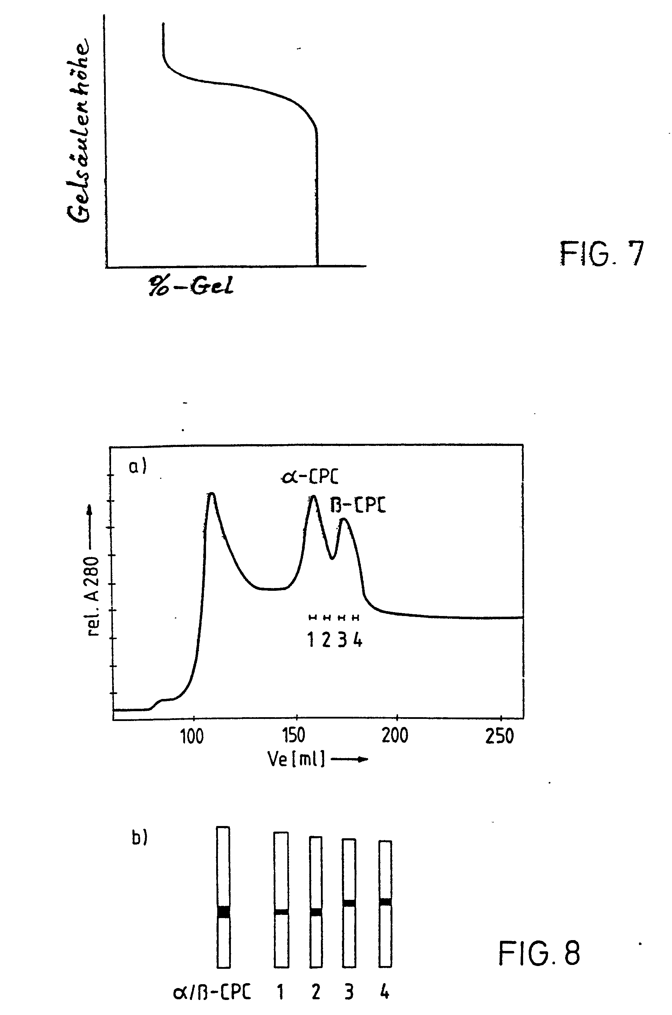

Ein beispielsweises Gelsystem zur Auftrennung von Proteinen und Peptiden in SDS ist in Figur 7 dargestellt. Zur Auftrennung wurde das Gelsystem von Ornstein, Davis, abgeändert nach Lämmli, mit folgender Modifikation verwendet: Der diskontinuierliche Übergang zwischen Trenngel und Sammelgel wird durch einen Gelgradienten gemäss Figur 7 ersetzt. Der beispielsweise Aufbau der Gelsäule beträgt bei den angegebenen Dimensionen etwa 200 ml aufgeteilt in 25 ml 3 % Sammelgel, zweimal 15 ml für den Gelgradient zwischen Trenngel und Sammelgel und schliesslich noch ungefähr 145 ml 15 % Trenngel.

Mit der beschriebenen gesamten Einrichtung und unter Anwendung des angegebenen Verfahrens ist es recht einfach, einen Gelgradienten gemäss Figur 7 herzustellen. Anschliessend ist ein beispielsweiser Arbeitsablauf mit der Einrichtung gemäss Erfindung in neun Arbeitsschritten zusammengefasst:

1. Oberen Adapter 10 mit Durapor-Filter ausrüsten und im Traggerüst 35 mit den Schrauben $s_3$ befestigen. Stromversorgungskabel anschliessen.

2. Unteren Adapter 20 mit Dialysiermembran und Durapor-Filter mit den Schrauben $s_{22}$ an den unteren Teil des Gerätes montieren. Adapter 20 über Schläuche a bis d mit 20 % Saccharose-Lösung füllen. Nylongitter 21 auf den Adapter legen.

3. Kühlfinger 6 und äusseren Glaszylinder 5 mit den Muttern $s_7$ zwischen den Halteplatten 2 und 3 fixieren.

4. 5 ml 20 %ige Saccharose-Lösung einfüllen und dann das obere Traggerüst 35 mit dem oberen Adapter 10 mittels den Schrauben $s_{35}$ befestigen. Adapter 10 mit Stromversorgungskabel versehen und mit Hilfe des Motors 30 ca. 2 cm über den unteren Adapter 20 absenken.

5. Kühlsysteme auf gewünschte Temperatur einstellen und das Gel wie in Figur 5 gezeigt bei einem Überdruck von ca. 0,785 bar (0,8 atü) giessen und anschliessend mit wenig Wasser überschichten. Kühlsystem unterbrechen und unter 0,785 bar (0,8 atü) bei ansteigender Temperatur, vorzugsweise auf Raumtemperatur, polymerisieren lassen.

6. Druck durch Öffnen von Schlauch e ablassen. Nach Druckausgleich die Geloberfläche mit Wasser spülen und zur Bildung des Raumes 16 mit ca. 50 ml Elektrodenpuffer überschichten, bis die Öffnung h überflutet wird.

7. Das zu trennende Präparat mit einer durch einen Schlauch verlängerten Pipette durch die Öffnung h auf die Geloberfläche auftragen.

8. Die Elektrodenpufferzirkulation und kontinuierliche Elutionsdurchspülung gemäss Figur 2 herstellen. Kühlsystem auf gewünschte Temperatur bringen.

9. Stromversorgungskabel der beiden Adapter mit Elektrophoresegerät verbinden und Strom einschalten.

Zur Überprüfung der Trenneigenschaft der Apparatur für die präparative Gelelektrophorese wurden die α- und β-Ketten von C-Phycocyanin aus dem Cyanobakterium Mastigocladus laminosus als Testgemisch verwendet. Diese Lichtsammlerproteine besitzen kovalent gebundene Farbchromophore und können deshalb während der Trennung direkt beobachtet werden. Die beiden Ketten α und β bestehen aus 162 bzw. 172 Aminosäuren. Dies entspricht einem Molekulargewichtsunterschied von ca. 5.8 %. Wie aus Figur 8 ersichtlich ist, bewegten sich die beiden Banden der C-Phycocyanin-Ketten als horizontale Banden durch das Gel in den unteren Adapter, wo sie mit dem kontinuierlichen Elutionssystem herausgespült wurden. Das Diagramm der Figur 8 und die darunter abgebildeten Gele der markierten Fraktionen zeigen die Auftrennung von C-Phycocyanin in die beiden Untereinheiten α und β. Aus der Abbildung ist weiter ersichtlich, dass mit der Einrichtung gemäss der Erfindung Auftrennungen mit ähnlicher Auflösung wie bei der analytischen Gelelektrophorese durchgeführt werden können.

Mit der Einrichtung für präparative Gelelektrophorese in SDS (Sodium Dodecyl Sulfat) konnten relativ grosse (MG > 20'000) und hydrophobe Peptide aufgetrennt werden. Die Trennmöglichkeiten wurden durch verschiedene experimentelle Beispiele wie die Trennung der α/β-Ketten von C-Phycocyanin aus dem Cyanobakterium Mastigocladus laminosus, die Reinigung von Clostripainfragmenten der LDH aus B. subtilis (BXI) und die Isolation von Untereinheiten der Reaktionszentren von Rhodopseudomonas viridis demonstriert. Die Ausbeute der gereinigten Peptide und Proteine betrug über 70 %. Die automatische Aminosäuren-Sequenzanalyse des Clostripainfragmentes Clp1 ermöglichte ohne weiteres die Sequenzierung bis zum 50. Abbauschritt und zeigte, dass die mit dieser Methode gewonnenen Peptide und Proteine für den automatischen Edman-Abbau geeignet sind.

Durch geeignete Wahl der Acrylamid-Konzentration können Peptide und Proteine aus den verschiedensten Molekulargewichtsbereichen aufgetrennt werden. Die obere Grenze der Acrylamid-Konzentration liegt bei ca. 25 % und ermöglicht die Auftrennung von Peptiden hinunter bis zu einem Molekulargewicht von ca. 3000 - 4000. Die untere Limite der Acrylamid-Konzentration dürfte bei etwa 6 % liegen. (Bei zu niedriger Acrylamid-Konzentration wird das Gel weich und schmierig.)

Ein wesentliches Problem bei den bisherigen Geräten für die präparative Gelelektrophorese lag in der unvollständigen Elution der im Gel aufgetrennten Proteinbanden. Die Elution wurde oft durch hohe Auswaschgeschwindigkeiten mit Elutionspuffer verbessert, was jedoch eine extreme Verdünnung der eluierten Banden zur Folge hatte und eine Detektion bei 280 nm unmöglich machte. Die Experimente mit dem neuen Gerät zeigten, dass bei einer Elutionsgeschwindigkeit von 10 ml/h keine Auflösungsverluste, bedingt durch unvollständige Elution, entstanden. Die Auftrennung konnte durch Detektion bei 280 nm im allgemeinen relativ gut verfolgt werden.

Die Sammelgeltechnik ermöglicht bei der Gelelektrophorese das Auftragen von relativ grossen Probenvolumen auf das Gel. Bei grösseren Gelen besteht jedoch das Problem darin, dass die Zwischenphase zwischen Sammelgel und Trenngel nach der Polymerisation meist deformiert ist. Dieses Problem konnte mit Hilfe der Vorrichtung zum Giessen von Gelgradienten umgangen werden, indem zwischen Sammelgel und dem oberen Teil des Trenngels ein Gelgradient eingeführt wurde. Dadurch konnten Probevolumen bis zu 15 ml auf das Gel aufgetragen werden. Die in 5 ml Probenpuffer gelösten $\alpha/\beta$-Ketten von C-Phycocyanin wurden im Sammelgel zu einer scharfen, horizontalen Bande konzentriert und bewegten sich ohne Deformation durch den Gelgradienten in das Trenngel.

Entscheidend für die Auftrennung und die symmetrische Elution der Banden ist die Wärmeableitung während der Elektrophorese. Für eine ausreichende Wärmeableitung sind bei der Apparatur vor allem zwei Punkte entscheidend: a) Kühlmantel und Kühlfinger ragen über die beiden Adapter hinaus, womit ein Temperaturgradient zwischen Gel und unterem Adapter verhindert werden kann; b) durch das Elektrodenpuffer-Zirkulationssystem ist eine weitere Kühlung der beiden Adapter gewährleistet.

Bei den Experimenten mit der Einrichtung für präparative PAGE entstanden während der Elektrophorese keine störenden Luftblasen. Die Gase, welche an der Platinelektrode durch Hydrolyse von Wasser entstanden, wurden mit dem Elektrodenpuffer-Zirkulationssystem wirkungsvoll herausgespült.

Die Einrichtung ermöglichte im weiteren eine wesentlich einfachere Durchführung der präparativen Gelelektrophorese. Für das Giessen des Geles werden keine zusätzlichen Adapter, die nach der Polymerisation wieder ausgetauscht werden müssen, benötigt. Das Gel kann dank der Gelgiessvorrichtung direkt auf den Elutionsadapter, welcher mit wenig Saccharose-Lösung überschichtet wurde, gegossen werden. Der totale Zeitaufwand für den Start einer präparativen Gelelektrophorese betrug etwa fünf Stunden. Eine Auftrennung in einem 15-%-Gel dauerte ein bis zwei Tage. Während dieser Zeit lief das Gerät selbständig und wartungsfrei.

## Patentansprüche

1. Einrichtung für präparative Gelelektrophorese, umfassend einen ersten äusseren kühlbaren Zylinder, einen im Innenraum des äusseren Zylinders angeordneten zweiten inneren kühlbaren Zylinder, eine zwischen erstem und zweitem Zylinder eingebrachte kompakte Säule aus Trennmaterial und ober- sowie unterhalb der Trennsäule angeordnete, gegen den inneren und äusseren Zylinder abgedichtete, translatorisch verschiebbare Adapterteile sowie Elektroden zur Bildung eines elektrischen Feldes über das Volumen der Trennsäule, dadurch gekennzeichnet, daß die Elektroden (18, 28) in die Adapter (10, 20) eingebaut und daß in den Adaptern angeordnete Kanalsysteme (17, 25, 27) als Teil eines Elektroden- und Elutionspuffer-Durchspülungssystemes vorhanden sind.

2. Einrichtung nach Anspruch 1, dadurch gekennzeichnet, dass die Kanalsysteme (17, 25, 27) der Adapter (10, 20) konzentrisch angelegte und von der Pufferlösung gleichzeitig nur in einer Richtung durchströmbare Kanäle sind.

3. Einrichtung nach Anspruch 2, gekennzeichnet durch einen in jedem Einzelkanal vorhandenen Trennsteg (T).

4. Einrichtung nach den Ansprüchen 1 und 2, gekennzeichnet durch einen oberen Adapter (10) mit mindestens einer Elektrode (18) in einem Elektrodenpufferkanal (17) und einem unterhalb des Elektrodenpufferkanals angeordneten ersten Trennelement (14) zur Separierung des Elektrodenpufferkanals von der Trennsäule (G) und mindestens zwei am äusseren unteren Rande des Adapters angeordneten Einlässen ($g_1$, $g_2$, $g_n$) zum Giessen des Trennmaterials, sowie durch einen unteren Adapter (20) mit mindestens einer Elektrode (28) in einem Elektrodenpufferkanal (27) und einem darüber angeordneten zweiten, selektiv wirkenden Trennelement (26) zur Separierung von einem nach unten und oben offenen Elutionskanal (25) mit einem über diesem angeordneten dritten selektiven Trennelement (24) zur Separierung des Elutionskanals (25) von der Trennsäule (G).

5. Einrichtung nach Anspruch 4, dadurch gekennzeichnet, dass an der Übergangsstelle der Adapter (10, 20) zur Trennsäule (G) ein flüssigkeitsgefüllter Raum (16, 21) vorgesehen ist.

6. Einrichtung nach den Ansprüchen 1 und 4, gekennzeichnet durch einen stationären oder stationär gehaltenen unteren Adapter (20) und einen temporären Verschluss eines Teils der Einlässe ($g_1$, $g_2$, $g_n$) und durch einen translatorisch verschiebbaren Adapter (10), der beispielsweise mit Hilfe eines Motors (30) oder mittels Hineinpumpen von Flüssigkeit über die noch offenen Einlässe ($g_1$, $g_2$, $g_n$) antreibbar ist, wobei sich ein fortlaufendes Überschichten von Flüssigkeit über die mit einem Flüssigkeitsvorratsgefäss oder Gradientenmischer verbundenen offenen Einlässe ($g_1$, $g_2$, $g_n$) entlang der Glaswand des äusseren Zylinders (5) in der Trennsäule (G) erzielen lässt.

7. Einrichtung nach Anspruch 6, dadurch gekennzeichnet, dass ein Trennmaterialmischungsgradient zwischen einem ersten Säulenabschnitt zum Sammeln und einem zweiten Säulenabschnitt zum Trennen angeordnet ist.

8. Einrichtung nach Anspruch 7, dadurch gekennzeichnet, dass das Trennmaterial ein Gel ist, und der Gradient zwischen Sammelgel und Trenngel angeordnet ist.

9. Einrichtung nach Anspruch 8, dadurch gekennzeichnet, dass das Gel ein Polyacrylamidgel ist.

10. Einrichtung nach einem der Ansprüche 1 bis 5, dadurch gekennzeichnet, dass das Flüssigkeitsleitsystem (a, b, c, d, e, f) zusammen mit der Gelkammer (G) ein geschlossenes System mit Flüssigkeitsabschluss ist.

## Claims

1. An apparatus for preparative gel electrophoresis, comprising a first outer coolable cylinder, a second inner coolable cylinder arranged within the inner space of the outer cylinder, a compact column of a separating material arranged between the first and second cylinders, and adapters arranged above and below the separating column, displaceable in translatory manner, sealed against the inner and outer cylinders, and electrodes for forming an electrical field over the volume of the separating column, characterized in that electrodes (18, 28) are incorporated into the adapters (10, 20) and wherein duct systems (17, 25, 27) are arranged in the adapters as part of the electrode and elution buffer rinsing system.

2. An apparatus according to claim 1, wherein the duct system (17, 25, 27) of the adaptors (10, 20) are concentrically arranged ducts, through which the buffer solution can only flow simultanseously in one direction.

3. An apparatus according to claim 2, wherein a partition (T) is provided in each individual duct.

4. An apparatus according to claim 1 and 2, wherein there is an upper adaptor (10) with at least one electrode (18) in an electrode buffer duct (17) and a first separating member (14) arranged below the electrode buffer duct for separating the latter from the separating column (G) and at least two inlets ($g_1$, $g_2$, $g_n$) arranged on the lower edge of the adopter for pouring the separating material, and wherein there is a lower adaptor (20) with at least one electrode (28) in an electrode buffer duct (27) and a second selectively operating separating member (26) positioned above it for separating from an elution duct (25), which is open at the top and bottom with a third selective separating member (24) arranged above it for separating the elution duct (25) from the separating column (G).

5. An apparatus according to claim 4, wherein a liquid-filled area (16, 21) is provided at the transition point between the adaptors (10, 20) and the separating column (G).

6. An apparatus according to claim 1 and 4, wherein there is a stationary lower adaptor (20) and a temporary closure of part of the inlets ($g_1$, $g_2$, $g_n$), and an upper adaptor (10), which can be displaced in a translatory manner, e.g. with the aid of a motor (30) or can be driven by pumping in liquid over the still open inlets ($g_1$, $g_2$, $g_n$), so as to permit a continuous overlaying of liquid over the open inlets ($g_1$, $g_2$, $g_n$) joined to a liquid storage vessel or gradient mixture, along the glass wall of the outer cylinder (5) into the separating column (G).

7. An apparatus according to claim 6, wherein a separating material mixing gradient is arranged between a first column section for collecting and a second column section for separating.

8. An apparatus according to claim 7, wherein the separating material is a gel and the gradient is arranged between the collecting gel and the separating gel.

9. An apparatus according to claim 8, wherein the gel is a polyacrylamide gel.

10. An apparatus according to one of the claims 1 to 5, wherein the liquid system (a, b, c, d, e, f), together with the gel chamber (G) is a close system with liquid seal.

## Revendications

1. Appareil pour électrophorèse préparative sur gel comportant un premier cylindre extérieur refroidissable, un deuxième cylindre intérieur refroidissable disposé l'intérieur du cyclindre extérieur, une colonne compacte en matière de séparation montée entre le premier et le deuxième cylindre et disposée au-dessus et au-dessous de la colonne de séparation, des éléments d'adaptateurs coulissants, rendus étanches à l'égard des cylindres intérieur et extérieur, ainsi que des électrodes destinées à former un champ électrique sur le volume de la colonne de séparation, caractérisé en ce que les électrodes (18, 28) sont montées dans les adaptateurs (10, 20) et en ce que les systèmes de conduit (17, 25, 27) disposés dans les adaptateurs constituent une partie d'un système de circulation d'une solution tampon d'électrode et d'élution.

2. Appareil selon la revendication 1, caractérisé en ce que les systèmes de conduit (17, 25, 27) sont des conduits disposés concentriquement aux adaptateurs (10, 20) et qui ne peuvent être parcourus simultanément par la solution tampon que dans un sens.

3. Appareil selon la revendication 2, caractérisé par une cloison T présente dans chaque conduit.

4. Appareil selon les revendications 1 et 2, caractérisé par un adaptateur (10) supérieur comportant au moins une électrode (18) dans un conduit de solution tampon d'électrode (17) et un premier élément de séparation (14) disposé au-dessous du conduit de solution tampon d'électrode destiné à séparer le conduit de la solution tampon d'électrode de la colonne de séparation (G) et au moins deux entrées ($g_1$, $g_2$, $g_n$) disposées sur le bord inférieur extérieur de l'adaptateur pour couler le produit de séparation, ainsi que par un adaptateur (20) inférieur comportant au moins une électrode (28) dans un conduit (27) de solution tampon d'électrode et un deuxième élément de séparation (26) agissant sélectivement, disposé au-dessus du conduit (27) pour séparer d'un conduit d'élution (25) ouvert vers le bas et vers le haut comportant un troisième élément de séparation (24) sélectif disposé au-dessus du conduit (25) pour séparer le conduit d'élution (25) de la colonne de séparation (G).

5. Appareil selon la revendication 4, caractérisé en ce qu'il est prévu un espace (16, 21) rempli de liquide au point de passage des adaptateurs (10, 20) vers la colonne de séparation (G).

6. Appareil selon les revendications 1 et 4, caractérisé par un adaptateur (20) inférieur fixe ou maintenu fixe et une obturation temporaire d'une partie des entrées ($g_1$, $g_2$, $g_n$) et par un adaptateur (10) coulissant qui peut être actionné par exemple au moyen d'un moteur (30) ou par pompage à l'intérieur de celui-ci de liquide par les entrées ($g_1$, $g_2$, $g_n$) encore ouvertes, un recouvrement permanent de liquide dans la colonne de séparation (G) pouvant être obtenu par les entrées ($g_1$, $g_2$, $g_n$) ouvertes reliées à un réservoir de liquide ou à un mélangeur de gradients le long de la paroi en verre du cylindre (5) extérieur.

7. Appareil selon la revendication 6, caractérisé en ce qu'il est prévu un gradient de mélange du produit de séparation entre une première section de colonne pour la collecte et une deuxième section de colonne pour la séparation.

8. Appareil selon la revendication 7, caractérisé en ce que le produit de séparation est un gel et en ce que le gradient est disposé entre le gel de collecte et le gel de séparation.

9. Appareil selon la revendication 8, caractérisé en ce que le gel est un gel de polyacrylamide.

10. Appareil selon l'une des revendications 1 à 5, caractérisé en ce que le système de circulation du liquide (a, b, c, d, e, f) forme avec la chambre à gel (G) un circuit fermé avec arrêt de liquide.

0 101 859

FIG. 1

FIG. 2

FIG. 3

FIG. 4

**0 101 859**

FIG. 5

FIG. 6

FIG. 7

FIG. 8